# EUROPEAN PATENT SPECIFICATION

(11) **EP 2 543 200 B1**
(45) Date of publication and mention of the grant of the patent: **26.08.2015**
(21) Application number: 10707878.4
(22) Date of filing: 01.03.2010
(51) Int. Cl.: H04W 4/06

(54) **Mobile user equipment, broadcast server and method for a wireless data communication network**
Mobiles Teilnehmergerät, Rundsendeserver und Verfahren für ein drahtloses Datenkommunikationnetzwerk
Equipement d'utilisateur mobile, serveur de diffusion et procédé pour un réseau de communication de données sans fil

(43) Date of publication of application: 09.01.2013
(73) Proprietor: Telefonaktiebolaget L M Ericsson (PUBL), 164 83 Stockholm (SE)
(72) Inventor: LAGERMAN, Mikael, S-414 75 Göteborg (SE)
(74) Representative: Ericsson
(86) International application number: PCT/EP2010/052538
(87) International publication number: WO 2011/107139

(56) References cited:
- WO-A1-2007/050223
- WO-A2-2007/040978

## Description

### TECHNICAL FIELD

The invention refers to a first mobile user equipment according to claim 1, a broadcast server according to claim 5; and a method according to claim 10.

### ABBREVIATIONS

- BCS: BroadCast Server
- HSPA: High Speed Packet Access
- MBMS: Multimedia Broadcast Multicast Service
- RAN: Radio Access Network
- UCA: UE Client Application
- UE: User Equipment
- VoIP: Voice over IP
- WCDMA: Wideband Code Division Multiple Access
- GSM: Global System for Mobile communication
- IP: Internet Protocol

### BACKGROUND

It is known to use a mobile user equipment in a wireless data communications network for both voice communication and data communication. Examples of known systems are GSM and WCDMA, which are well known and will therefore not be discussed further in the description of the background to the invention. However, it is known that each system uses channels that can be used by the user equipments for communication. The channels can be formed by frequency and time frame or frequency and code or in MIMO (Multiple-input and multiple-output) which is a technique using multiple antennas in, for example, WLAN (Wireless Local Area Network) and LTE (Long Term Evolution). Each system provider is only given a specified frequency range to be used to create the channels. Therefore, each system provider has a restricted amount of channels to be used by an increasing amount of users. It is long known that the amount of channels, at least during peak occasions, is not enough to satisfy the amount of users.

Hence, there is a need for more channels in the systems or to utilize existing channels more efficiently.

In WO2007040978 is disclosed a system and method to establish a wireless group call from one of a plurality of communication units to other communication units.

### DISCLOSURE OF INVENTION

Prior art solutions are based on unicast requiring one dedicated channel per user equipment receiver which quickly consumes all available resources and gives the problem of congestion up the networks without being able to reach the necessary numbers of users.

The object of the present invention is to allow an increased number of users in a wireless data communication network known in prior art.

The invention solves the problem by use of an inventive first mobile user comprising two ports and a first client application; a broadcast server communicating with the client application, and a method according to the appended independent claims

The first mobile user equipment according to the invention is adapted for use in a wireless data communication network. The first user equipment comprises a transmitting unit, a receiving unit, a storage unit and a first port. The user equipment is arranged to communicate with a radio base station via the first port on a first channel for in-and outgoing broadcast traffic provided by a service provider. The invention is characterized in that the first user equipment comprises a second port and a first client application arranged to communicate with a broadcast server via the second port and the radio base station on the first channel. The broadcast server is arranged to receive and store information from user equipments and try to make a match so that several user equipments can utilize a common channel. The first user equipment is either equipped with device that allows a user to switch the first user equipment into a broadcast mode by enabling the first client application or the first client application is arranged to automatically switch into broadcast mode when predetermined certain conditions are met. When the user equipment is in the broadcast mode, the broadcast server can decide whether the first user equipment should join a second user equipment being a ring group leader of whether the first user equipment should be a new ring group leader. If the broadcast server decides that the first user equipment should join the second user equipment, the first client application tunes in on the same channel as the second user equipment after having received information from the broadcast server. When the first user equipment is ordered to switch channel, the first client application is arranged to terminate the first channel when the first user equipment switches to the second channel.

Here, "ring" refers to a range (area with similar radio conditions) in signal strength with reference to a radio base transceiver managing a cell within the communication system. The signal strength is dependent on distance between the user equipment and the transceiver and whether there are obstacles or anything else that affects the signal conditions. The user equipment changes its output signal strength dependent on signal conditions and if two user equipments have the same signal strength or similar signal strength, i.e. within the range, they are within the same ring and can form a ring group according to the invention.

The first client application is arranged to register the user equipment in the broadcast server wherein the broadcast server authenticates the user equipment and provides channel and ring group information to the first client application. The first client application is arranged to report power condition and selected communication channel to the broadcast server when the first user equipment enters a cell, stays in a cell or moves to an adjacent cell, regardless whether the first user equipment becomes a ring group leader or joins a ring group leader. The first client application is thus arranged to update the broadcast server regarding power condition and selected communication channel.

The broadcast server is adapted for use in the wireless data communication network. The broadcast server comprises means for receiving data, a receiver known in prior art, means for transmitting data, a transmitting antenna unit known in prior art, and means for storing data, a data storing unit known from prior art. The invention is characterized in that the broadcast server is arranged to communicate with at least the first client application wherein the broadcast server is arranged to receive information at least regarding power condition and channel information and to store the information. The broadcast server is arranged to communicate stored information regarding a second user equipment, if such a second user equipment has been registered in the broadcast server, to the first client application for allowing the first client application to either stay on the first channel as a ring group leader or to join a second channel already used by the second user equipment being a ring group leader for use of the second channel as a common channel.

The broadcast server is arranged to schedule transmission to and from the first and second user equipments in the ring group using the second channel. The broadcast server can thus be used for managing user equipment behavior and media distribution from one or several suppliers.

The broadcast server is positioned between the core network and the service provider, with the service provider or within the core network, and positioned in the service layer. Regardless of which, the core network should remain unaffected by the broadcast server and the client application implementation and conduct communication according to the standard decided for the communication network in use. However, the core network is indirectly affected in a positive way since the inventive devices and method gives an increased possibility to handle an increased number of users due to the charring of channels

In the broadcast mode, the first user equipment in a ring connects to the broadcast server, reports its radio conditions and assumes the role of a ring group leader. Consecutive users report their conditions to the broadcast server and the broadcast server checks whether if the available ring group leaders offer suitable conditions and either orders the consecutive user equipment(s) to join an existing ring group by the client application tuning in on the same channel as the ring group leader or the broadcast server initiates a new ring group and dedicates one user equipment to assume the role of ring group leader for that ring group. Here "assuming the role" means that the channel and other information necessary for establishing a channel used by the ring group leader is copied and used by the user equipment(s) that joins the ring group.

To sum up the invention, the invention solves the problem by using each channel in a more efficient way by allowing several users in a group to use the same channel if the same users in the group are under similar radio conditions. Here, "similar radio conditions" refers at least to the user equipments' power condition, i.e. predetermined power dependent on for example distance to a radio base station. In the following text all users in the group will be referred to as belonging to a ring. A second pre-requisite for forming a group using a common channel could be the type of content from the service provider. If the content is the same and the radio conditions are similar, it is beneficial to use a common channel. However, the different content could also be broadcasted on the same channel, but where the broadcast server labels the contents in such a way that the different user client applications only forwards the content intended for its respective user equipment.

### BRIEF DESCRIPTION OF DRAWINGS

The invention will below be explained further in connection to a number of drawings, in which:
Figure 1 schematically shows the architecture of a wireless data communication network according to the invention.
Figure 2 schematically shows a radiation pattern in a cell and a first sequence of user equipment movements within the cell.
Figure 3 schematically shows a radiation pattern in a cell and a second sequence of user equipment movements within the cell.
Figure 4 schematically shows a radiation pattern in a cell and a third sequence of user equipment movements within the cell.
Figure 5 schematically shows first mobile user equipment UE1 for a wireless data communication network, and in which;
Figure 6 shows a flow chart over the method according to the invention.

### EMBODIMENT(S) OF THE INVENTION

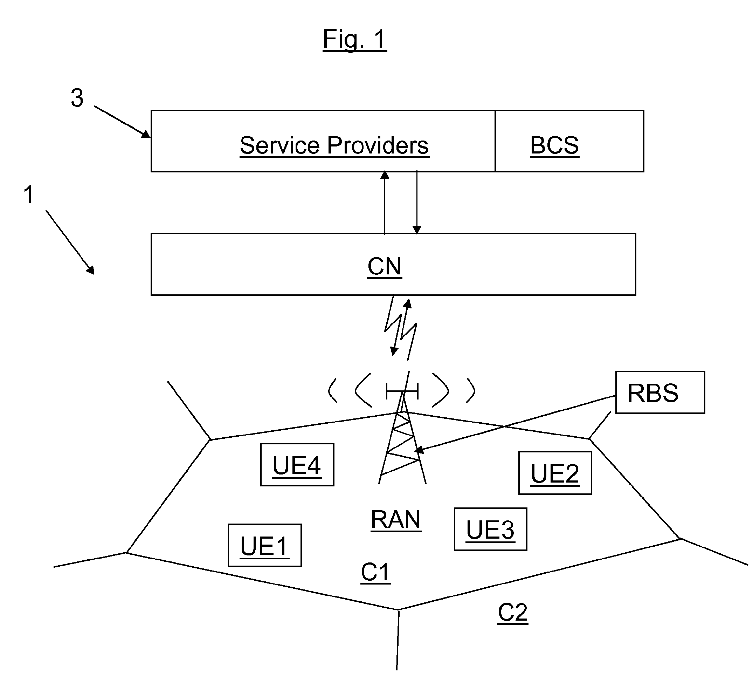

Figure 1 schematically shows the architecture of a wireless data communication network 1 according to the invention. The communication network comprises a Core Network CN, a Radio Access Network RAN and one or more mobile user equipments UE1-UE4. The network 1 is communicating with a service provider 3 that is part of the Internet and provides for various types of services, for example Voice over Internet Protocol, IP, and various streaming or non-streaming services by use of data communication and IP-address. The Core Network CN controls the Radio Acces Network RAN and provides for communication between the user equipment UE1-UE4 and the service provider SP. The core network CN and the Radio Access Network RAN can be based on WCDMA or GSM and is known per se in prior art. The Internet is also known in prior art and will not be discussed further here. However, it is important to recognize that the user equipment UE1-UE4 communicates with the service provider via data streams and uses IP-address for establishing communication between the Internet and the user equipment UE1-UE4. The IP-address may be common for all user equipments UE1-UE4 in a broadcast scenario and separation of information can be done by use of different ports.

The invention comprises a Broadcast Server BCS positioned before the Core Network CN, i.e. either between the Service Provider or as part of the Internet. The position is only a question of definition on what is part of the Internet or not. One advantage of the Idea is that the Broadcast Server BCS can be introduced in the network without disturbing the Internet, the Core Network CN or the Radio Access Network. The Broadcast Server BCS according to the invention allows for multicast based broadcast which can be used by several user equipments on the same channel within an area, cell, being supported by the Radio Access Network.

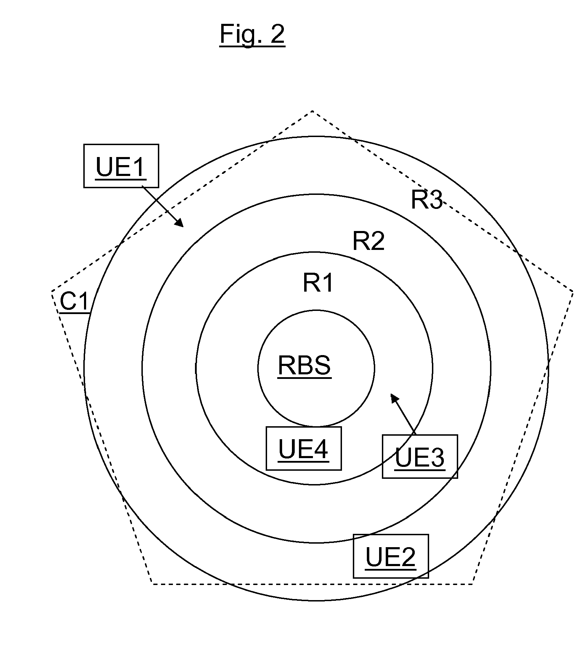

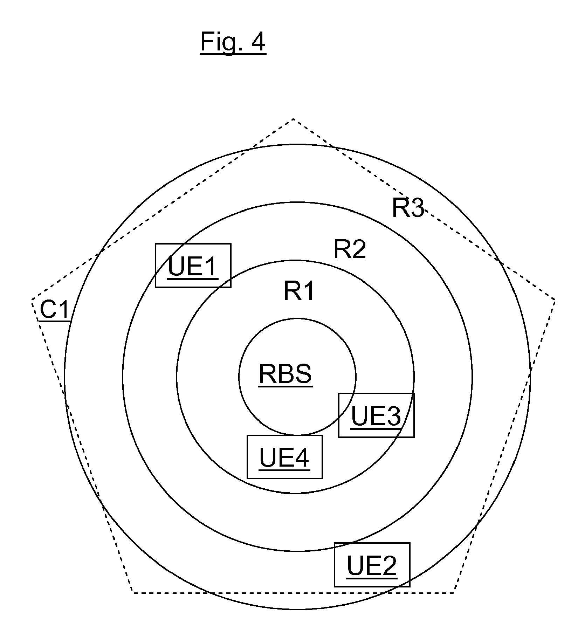

Figure 1 shows that the communication network 1 is a cellular network comprising a first cell C1 managed by the radio base station RBS and adjacent cell(s) C2 being supported by additional radio base stations. If a user equipment moves from the first cell C1 to an adjacent cell C2, there can b a soft handover, a softer handover or a hard handover. Techniques for handover for the data communication are known per se in prior art, but the Broadcast Server BCS may be arranged to support the first cell C1 and an additional Broadcast Server BCS may be supporting the adjacent cell C2. The two Broadcast Servers may have inter-communication in order for the Broadcast Server BCS supporting the first cell to handover to the Broadcast Server supporting the adjacent cell. The user equipment is provided with a user client application (UCA1-UCA2 in figure 4) that communicates with the Broadcast Server BCS for allowing multicast based broadcast which can be used by several user equipments on the same channel within the first cell. During a handover, the Broadcast Server BCS supporting the first cell C1 negotiates with the Broadcast Server BCS supporting the adjacent cell in order to give the user client application information whether if the user equipment UE1-UE4 should be a new ring group leader or to join an existing ring. This will be explained further in connection to figures 2-5.

Figure 2 schematically shows a radiation pattern with a cell and a first sequence of user equipment movements within the cell. Figure 2 shows that the radio base station RBS comprises an omnidirectional antenna with a four user equipments UE1-UE4 at specific distances from the radio base station RBS. The declining signal strength (typically as a function related to the distance between the user equipment UE1-UE4 and the radio base station RBS) will form circular bands of similar signal strengths as illustrated in the figures 2-4. A certain range of distance from the radio base station RBS forces the user equipment UE1-UE4 to a specific power condition in order for the radio base station RBS and the user equipment UE1-UE4 to be able to communicate. The power conditions are set in a negotiation between the Radio Access Network and the user equipment UE1-UE4 according to a standard decided on which type of network is used, e.g. WCDMA or GSM. According to the invention, the obstacle of power regulation can be reduced or even eliminated by organizing multiple users in groups displayed to similar power conditions In figure 2, different ranges of distance has been denoted R1, R2 and R3, and where R1 is the closest range and R3 the range farthest away. The different ranges R1-R3 will in the description of the invention be named "ring". The invention is naturally not limited to three rings, but a cell may comprise more or less rings than three. Furthermore, the radio base station RBS is not limited to comprise an omnidirectional antenna, but may be a directional antenna supporting a cell in the form of a piece of cake, .e. essentially triangular. The rings R1-R3 will then represent different range distances within that type of cell. The shape of the cell can thus vary as long as the rings can be defined and used according to the invention.

Figure 2 shows a first user equipment UE1 outside the first cell C1 approaching the third ring R3 in which a second user equipment UE2 is already positioned. In the second ring R2 a third user equipment R3 is positioned and moves to towards the first ring R1 in which a fourth user equipment is positioned. In figure 2 the second user equipment UE2 is ring group leader in the third ring, the third user equipment UE3 is the ring group leader of the second ring R2 and the fourth user equipment UE4 is the ring group leader of the first ring R1. Since the first user equipment UE1 moves into the third ring R3 already occupied by a ring group leader, namely the second user equipment UE2, the first user equipment UE1 can join the same channel being used by the second user equipment UE2. In the same way, since the third user equipment UE3 moves into the first ring R1 already occupied by a ring group leader, namely the fourth user equipment UE2, the third user equipment UE3 can join the same channel being used by the fourth user equipment UE4.

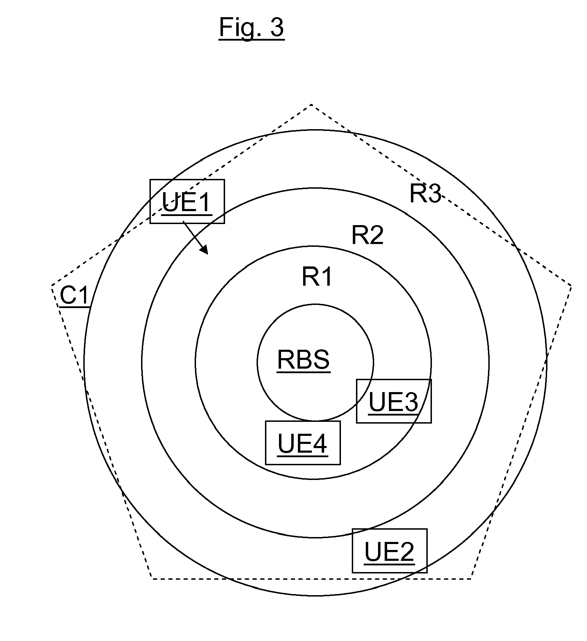

Figure 3 schematically shows a radiation pattern with a cell and a second sequence of user equipment movements within the cell. In figure 3 the first user equipment UE1 has joined the second user equipment UE2 to form a ring group in the third ring R3 and the third user equipment UE3 has joined the fourth user equipment UE4 to form a ring group in the first ring R1. The first user equipment UE1 has terminated its previous channel and has now joined the channel being used by the ring group leader, i.e. the second user equipment UE2, of the third ring R3. In the same way, the third user equipment UE3 has terminated its previous channel and has now joined the channel being used by the ring group leader, i.e. the fourth user equipment UE4, of the first ring R1. Figure 3 shows that the first user equipment UE1 moves towards the second ring R2.

Figure 4 schematically shows a radiation pattern with a cell and a third sequence of user equipment movements within the cell. Figure 4 shows that the first user equipment UE1 has moved into the second ring R2. The second ring R2 is not occupied by another user equipment which means that there is no ring group leader for the second ring R2. The first user equipment UE1 now maintains its previous channel and becomes the ring group leader of the third ring R3. This is now also registered at the broadcast server BCS. Any user equipment entering the third ring R3, will register with the broadcast server BCS to see if the conditions are such that it is suitable to join the channel used by the first user equipment UE1 or if the user equipment entering the third ring R3 should be a second ring group leader. Hence, it is possible to have several ring group leaders within one ring.

It should be noted that the broadcast server BCS at any time could order any user equipment to abandon the commonly used channel and to get a separate channel.

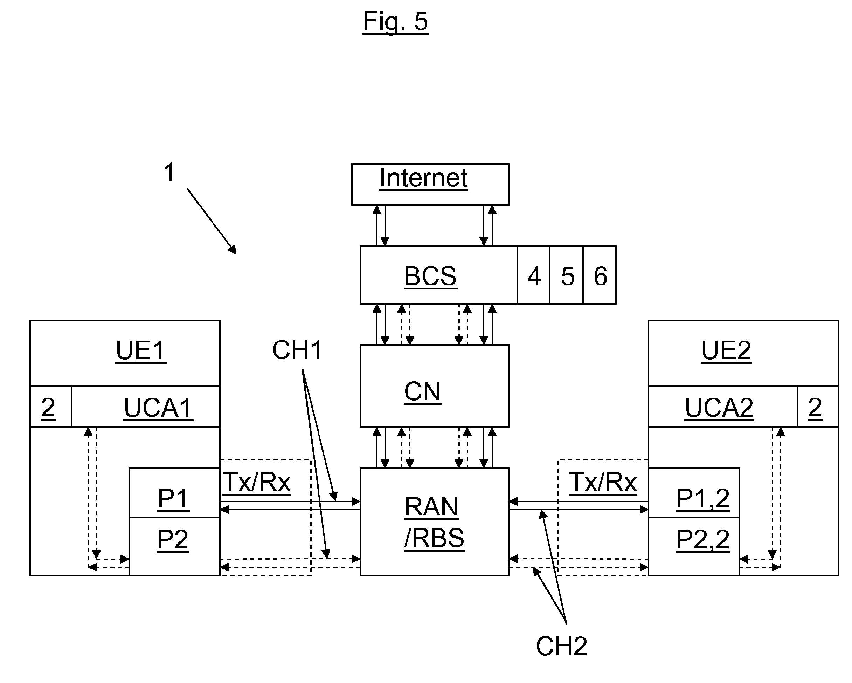

Figure 5 schematically shows a first mobile user equipment UE1 for a wireless data communication network 1. The first user equipment UE1 comprises a transmitting unit Tx, a receiving unit Rx, a storage unit 2 for storing data and a first port P1. The user equipment UE1 is arranged to communicate with a radio base station RBS via the first port P1 and the transmitting unit Tx and the receiving unit Rx on a first channel CH1 for in-and outgoing broadcast traffic provided by the service provider 3. In figure 2 the first user equipment UE1 comprises a second port P2 and a first client application UCA1 arranged to communicate with the broadcast server BCS via the second port P2 and the transmitting unit Tx and the receiving unit Rx and the radio base station RBS on the first channel CH1. The broadcast sever BCS is arranged to control the first client application UCA1 to make channel selection based on information from the first client application UCA1 and other client application(s) registered with the broadcast server BCS. The first client application UCA1 is arranged to comply with the decision from the broadcast server between letting the first user equipment UE1 either stay on the first channel CH1 as a ring group leader or to join a second channel already being used by a second user equipment UE2 being a ring group leader. The second channel CH2 will then be used as a common channel. The first client application UCA1 is arranged to terminate the first channel CH1 when the first user equipment UE1 switches to the second channel CH2. The first channel CH1 will then become available in the network for a different user equipment or a different ring group.

The first client application UCA1 is arranged to register the user equipment UE1 at the broadcast server BCS, wherein the broadcast server authenticates the first user equipment UE1 and provides channel and ring group information to the first client application UCA1.

The first client application UCA1 is arranged to report power condition and selected communication channel to the broadcast server BCS and the broadcast server BCS orders the client application to stay on the first channel and become a ring group leader or to join an already existing ring group as a member.

Regardless whether if the first user equipment UE1 becomes a ring group leader or joins a ring group leader, the first client application UCA1 is arranged to update the broadcast server BCS regarding power condition and selected communication channel. It is important that the broadcast server is updated so that it can detect when the power condition changes over a selected first threshold value. If the power condition changes, the broadcast server can order the first client application to move to a different ring group or to perform any other suitable task.

The broadcast server BCS is arranged for use in a wireless data communication network according to the above. The broadcast server BCS comprises means for receiving data 4, means for transmitting data 5 and means for storing data 6. Any known receiving, transmitting, and storing device and method can be used as long as the respective means/devices can handle data communication. The broadcast server BCS is arranged to communicate with the first client application UCA1, the second client application UCA2 and any other user equipment that wants to utilize the broadcast function in the cell. All user equipments uses the second port P2 for communication with the broadcast server BCS. The broadcast server BCS is arranged to receive information from each user equipment UE1, UE2 at least regarding power condition and channel information and to store the information in the means for storing data. The broadcast server BCS is arranged to communicate stored information regarding the second user equipment UE2 to the first client application UCA1 for enabling the first client application UCA1 to join the second user equipment UE2 on the second channel CH2 already used by the second user equipment UE2 being a ring group leader for use of the second channel CH2 as a common channel. If the first client application UCA1 chooses for the first user equipment UE1 to join the second channel CH2, with the second user equipment UE2 as ring group leader, the first client application UCA1 orders the first user equipment UE1 to drop all current information regarding the first channel CH1 and switch to the channel information used by the second user equipment UE2. Hence, the first user equipment UE1 copies the channel information from the second user equipment UE2 and can then tune in and listen on the second channel CH2. What kind of information needed for establishing or listening on a certain channel is decided on the type of network in use, for example WCDMA, GSM and LTE.

In figure 5, the second user equipment comprises a transmitting unit Tx, a receiving unit Rx, a storage unit 2, a first port P1,2 and a second port P2,2 and a second user client application UCA2. The functionality of the second user equipment UE2 and the first user equipment UE1 is identical and will therefore not be discussed further here.

The broadcast server BCS is arranged to schedule transmission to and from the first and second user equipments UE1, UE2 in the ring group using the second channel. The broadcast server BCS thus manages the behavior of the user equipments and the media distribution. The first and second user application UCA1, UCA2 could be adapted to sort out information in the broadcast for each of their respective user equipments. For example, IP-addresses could be used in order to create sub-channels within the commonly used channel CH2. The sub-channel IP-address is then used by the user client application UCA1, UCA2 to sort out information in the broadcast data stream. The broadcast server BCS could be used to add such sub-channel IP-address in such a way that the IP-address becomes embedded in the correct position in the data packets.

The broadcast server BCS is positioned between the core network CN and the service provider 3 or positioned together with the service provider 3, but positioned in the service layer. In this way the service provider 3, the core network CN or the radio area network RAN is not affected by the addition of the broadcast server BCS.

As mentioned before, the broadcast server BCS could at any time order any user equipment UE1, UE2 to abandon the commonly used channel and to get a separate channel. The establishment of a new channel follows standard routine for the network in to which the user equipment UE1, UE2 is connected and the first port P1 is used accordingly. The second port P2 is used for control communication between the client application UCA1, UCA2 and the broadcast server BCS.

One example of an advantage is that the invention provides a mean to reach essentially unlimited numbers of users with the same message without consuming all the network resources is necessary for several applications such as effective group communication and emergency alerts to the general public.

Three main deployments of the invention will be described below: Dynamic (preferred), static and shared (interleaved).

The invention refers to an IP connectivity solution feasible to use for group receivers of joint voice (VoIP) and data. To simplify static rings may be deployed (the second apparatus requested by the ID), but the dynamic deployment outlined below has added value, especially in scenarios of fairly small groups or tight clusters of users in close (within the same ring) vicinity of each other.

Below is an example of the invention in use with a WCDMA communication network.

In addition to the cellular WCDMA network used for IP connectivity, two main components are deployed:
The BroadCast Server BCS managing client management and media distribution.

User equipment Client Application UCA1-UCA2 making channel selection and provides Ring group leader and Group client service.

Inter solution communication:
Three roles are defined: The broadcast server BCS, Ring group leader and Group client.

In addition to the user client application UCA1, UCA2 registration and channel information between the user equipment UE1, UE2 and the broadcast server BCS, the ring group leader also communicates group content and group control information to the broadcast server BCS and applicable parts of this is relayed back on the jointly used downlink channel CH2 to all the Group user equipments UE1, UE2 and their respective client applications UCA1, UCA2.

If the group communication originates from the ring group leader, his speaker is muted by the client application UCA1, UCA2. If the broadcast originates from the broadcast server BCS or a content provider behind the broadcast server BCS all receiver speakers are active.

Optionally selective presentation of messages (Shared by multiple media channels) is feasible by means of client identity etc. Such broadcast channel as outlined here could also potentially be used to distribute multiple groups' information by applying selective filtering in the client application UCA1, UCA2. This if preferred for scenarios where transmission is very sporadic and/or delays of right to use the channel (line busy) are acceptable. The gain, of cause, is the need of much less number of channels compare to deployment of one channel per content.

### Channel selection:

A user equipment UE1, UE2 initially establish a dedicated (regular) data channel with the communication network using the first port P1 according to the routine governed by the type of communication network used and registers itself at the broadcast server BCS using the second port P2 according to the invention. The broadcast server BCS authenticates the user and provides channel and ring group information to the client application UCA1, UCA2. Based on this information (channel content, signal conditions of active ring groups) the client application UCA1, UCA2 either joins an existing ring group or assumes the role of ring group leader for a new ring group.

In all cases the client application UCA1, UCA2 reports the power condition and selected communication channel (content) to the broadcast server BCS.

If a suitable ring group leader is available the client application UCA terminates its dedicated data channel and forces the user equipment UE1-UE4 to adapt to the channel used by the ring group leader by implementing the Walsh code, if applicable any ciphering key used, IP-address, etc. used by the ring group leader for establishment of use of the channel used by the ring group leader. Any user equipment UE1-UE4 could also be prevented from transmitting, and the broadcast server could be arranged to act as a scheduler for allocating the user equipments in a group ring to transmit in a fashion that minimises or avoids congestion, collision and interference. The scheduling could be based on the user equipment requesting permission from the broadcast server to transmit. The permission could be based on collision detection, i.e. if there is no collision then transmission is allowed, or by allocating different users to specified time frames. The scheduling could also be based on free transmission and collision avoidance by detection and retransmission. Other scheduling possibilities are also possible within the scope of the invention.

If radio conditions changes the client application UCA first attempts to switch to another ring group leader, and first if none is available, assumes the roll of ring group leader for a new ring.

The broadcast server BCS manages the active ring groups and periodically updates the client application UCA1, UCA2 of the current ring groups availability and associated conditions. The broadcast server BCS also initiates merges of ring groups if feasible to reduce the numbers of used radio resources.

The main advantage is eliminating the limit of users that may be in active communication at the same time.

WCDMA (HSPA) is currently limited to 32 parallel data users per cell. The present invention transforms this from 32 users to 32 contents with almost unlimited numbers of users per content.

If the communication system is a GSM network, the difference from the WCDMA example above is that different information has to be transferred from the ring group leader to the user equipment that wants to join the ring group. Also here is it the broadcast server BCS that registers information about the user equipments and administrates the ring groups, ring group leader and scheduling of the user equipments within the ring groups. If a suitable ring group leader is available the client application UCA terminates its dedicated data channel and forces the user equipment UE1-UE4 to adapt to the channel used by the ring group leader by implementing the frequency, time slot, session key, crypto, IP-address, power condition, etc. used by the ring group leader for establishment of use of the channel used by the ring group leader.

Regardless of which communication system that is used, the channel set up, channel maintenance and the channel control for the ring group leader is managed by the standard decided for the communication system in use. The communication route for the control information between the network and the user equipment is done via the first port and the communication between the broadcast server and the client application is done via the second port, which means that the communication between the network and user equipment will not be disturbed and does not have to be altered.

Below is an example on how the IP-address could be used.

### Native 3GPP address deployment:

As the user equipment establish PS data service via the cellular network the GGSN assigns the mobile an IP address from a range assigned the cellular network for its users. This pool of addresses are periodically reused but will be statically assigned the individual user for the duration of the PS session. The same range is used independently if the PS data service is used via roaming from abroad and the user's data traffic is always terminated at the home operators Gi interface at his GGSN.

According to the invention the ring group leader and all ring group members will share this ring group leader's initial IP address. Secondary user's addresses are released as they become ring members under a ring leader.

### Port separation (similar to NAT):

Traditionally, to separate data traffic to different applications running on one PC assigned one IP address; port numbers (inside TCP respective UDP headers) are used. Similar ports is used by NAT to translate common IP addressed packages to different PCs in a NATed privately LAN.

According to the invention the broadcast server BCS may assign similar NAT function "behind" the client application UCA on a session level. I.e. each ringleader is not aware of all users and therefore becomes a more superior node. Here, the broadcast server BCS has to manage the port and subaddress assignment task.

### Multiple port strategies may be deployed:

Straight forward - only one session exist and all share the same address/content and ports are not used. This is the mobile TV case.

Individual content separated by individual ports - Each user equipment receives individual content distinguished by port number. Individual media streaming over a common broadcast channel.

Sub-groups - some channels defined by ports are used by a sub-group of users but not all, for example a fire truck group.

These strategies may be mixed by assigning utilizing some port channels for common sessions and some for individual usage. The broadcast server BCS manages these assignments.

### MIP

If individual IP addresses without port numbers for separation is requested to enable the end-user application to operate etc. a Mobile IP solution may be deployed. The broadcast server BCS then executes the MIP Home Agent role and expands a static IP address of the user equipment UE to the external world. The Home Agent dynamically translates the "official" address to the currently used to reach the client application UCA. The client application UCA then re-translates the temporary/shared IP address used between the Home Agent and the client application UCA to the static address used publicly by the Home Agent for the user equipment UE at the broadcast server BCS.

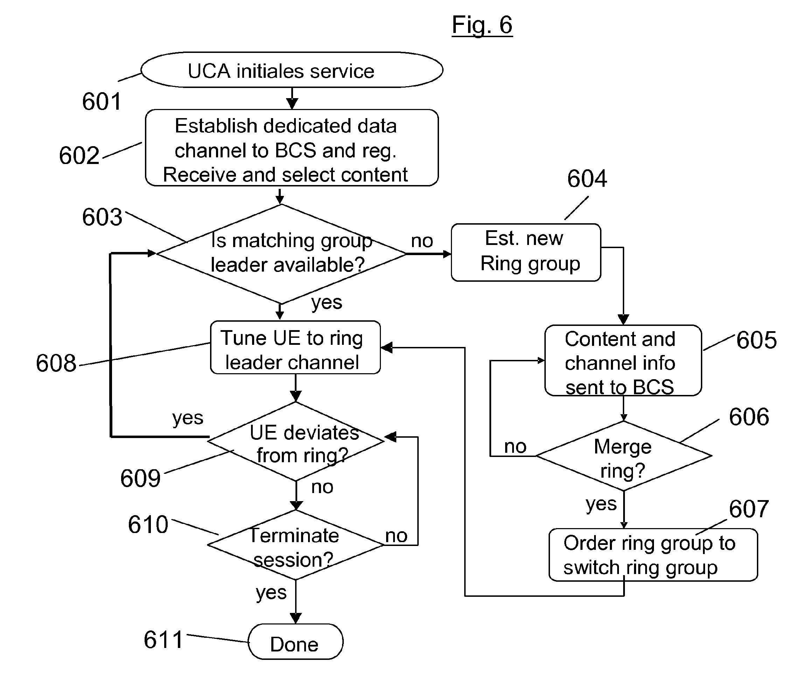

Figure 6 shows a flow chart of the invention:
Box 601: The client application UCA initiates service with the broadcast server. The user equipment channel set-up with the network is done according to the network protocol and is unaffected by the client application UCA and broadcast server communication.
Box 602: The client application UCA establishes dedicated data channel to the broadcast server BCS and register the user equipment by giving channel set-up information and content. The client application UCA receives channel set-up information and service provider content regarding the ring group leader being registered with the broadcast server,. The client application UCA then selects content from the broadcast server BCS and tunes in on the channel used by the ring group leader.
Box 603: The client application UCA checks if there is a matching ring group leader available?
   If yes, goto Box 608.
   If no, goto Box 604.
Box 604: A new ring group is established by turning the user equipment into a ring group leader in the broadcast server register.
Box 605: The client application UCA of the ring group leader transmits content and channel information to the broadcast server BCS. The client application UCA extracts configuration information about the user equipment's channel and service provider content from the user equipment and reports to the broadcast server BCS that registers the information.
Box 606:The broadcast server BCS decides if the new ring group should be merged with a different ring group.
   If the broadcast server BCS decides that the rings should be merged, goto box 607.
   If the broadcast server BCS decides that the rings should not be merged, goto Box 606. This is repeated until the user equipment leaves the ring.
Box 607: The broadcast server BCS orders the members of the switching ring group to switch to the new ring group.
Box 608: The user equipments changing ring group tunes in to the channel used by the new ring group leader by copying channel and session set-up information. The added user equipment now "eavesdrops" on the group leader channel.
Box 609: Since the user equipment moves, the conditions of the user equipment may no longer fit the ring group. The user equipment may also change contents from the service provider in such a way that the user equipment no longer fits the ring group. The decision is made by the broadcast server BCS when comparing information about the other user equipments in the ring group. However, a decision could also be made by the client application UCA when comparing information about the other user equipments in the ring group via the broadcast server BCS and that decision could be to ask the broadcast server BCS for a new ring group..
   Does the user equipment deviate from the ring group?
   If yes, goto Box 603.
   If no, goto Box 610.
Box 610: Should the session be terminated? I
   If yes, goto Box 611.
   If no, goto Box 609. This is repeated until the session is terminated.
Box 611: The session is terminated by the client application UCA. The broadcast server BCS is informed by the client application UCA.

## Claims

1. A first mobile user equipment ,UE1, for a wireless data communication network (1), the first mobile user equipment ,UE1, comprising a transmitting unit ,Tx, a receiving unit ,Rx, a storage unit (2) and a first port, P1, the first mobile user equipment ,UE1, is arranged to communicate with a radio base station ,RBS, via the first port ,P1, on a first channel ,CH1, for in-and outgoing broadcast traffic provided by a service provider (3), **characterized in that** the first mobile user equipment ,UE1, comprises a second port ,P2, and a first client application, UCA1, arranged for co-operation with a broadcast server ,BCS, via the second port ,P2, and the radio base station ,RBS, on the first channel ,CH1, wherein the first client application ,UCA1, is arranged to be able to switch to a broadcast mode and, when in the broadcast mode, then arranged to provide the broadcast server ,BCS, with information regarding the first mobile user equipment ,UE1, wherein the first client application ,UCA1, is arranged to receive a decision from the broadcast server ,BCS, to either let the first mobile user equipment ,UE1, stay on the first channel ,CH1, as a ring group leader or to join an existing ring group using a second channel ,CH2, already used by at least a second user equipment ,UE2, being a ring group leader for use of the second channel ,CH2, as a common channel, wherein the first client application ,UCA1, is arranged to terminate the first channel ,CH1, when the first user equipment ,UE1, switches to the second channel , CH2, wherein the first client application ,UCA1, when the first mobile user equipment ,UE1, is the ring group leader is arranged to communicate group content and group control information to the broadcast server , BCS.

2. The first mobile user equipment ,UE1, according to claim 1, wherein the first client application ,UCA1, is arranged to register the first mobile user equipment ,UE1, at the broadcast server ,BCS, wherein, after the broadcast server (BCS) has authenticated the first user equipment ,UE1, the first client application ,UCA1, is arranged to receive channel and existing ring group information from the broadcast server ,BCS.

3. The first mobile user equipment , UE1, according to any one of claims 1 or 2, wherein the first client application ,UCA1, is arranged to report power condition and selected communication channel to the broadcast server , BCS.

4. The first mobile user equipment ,UE1, according to any one of claims 1-3, wherein the first client application ,UCA1, is arranged to update the broadcast server ,BCS, regarding power condition and communication channel.

5. A broadcast server , BCS, for a wireless data communication network (1), wherein the broadcast server (BCS) comprises means for receiving data (4), means for transmitting data (5) and means for storing data (6), **characterized in that** the broadcast server ,BCS, is arranged for co-operation with at least a first client application ,UCA1, via a second port,P2, of a first mobile user equipment ,UE1, wherein the broadcast server ,BCS, is arranged to receive information at least regarding power condition and channel information and to store the information in the means for storing data (6), wherein the broadcast server ,BCS, is arranged, based on the stored information, to decide whether the first mobile user equipment should join an existing ring group with at least a second user equipment ,UE2, being a ring group leader or whether the first mobile user equipment should be designated ring group leader, the second user equipment ,UE2, comprises a second client application ,UCA2, the first mobile user equipment ,UE1, and the second user equipment ,UE2, form a ring group, wherein, if the broadcast server decides that first mobile user equipment ,UE1, should join the existing ring group with the second user equipment ,UE2, being the ring group leader, the broadcast server ,BCS, is arranged to communicate stored information regarding the second user equipment ,UE2, to the first client application ,UCA1, for enabling the first client application ,UCA1, to tune in to a second channel ,CH2, for use of the second channel ,CH2, as a common channel, wherein the broadcast server ,BCS, is arranged to receive content and group control information from the first client application ,UCA1, when the first mobile user equipment ,UE1, is the ring group leader and the second client application ,UCA2, when the second user equipment ,UE2, is the ring group leader, wherein the broadcast server ,BCS, is arranged to relay back parts of group content and group control information on the second downlink channel ,CH2, used as a common channel to all user equipments in the ring group and their respective client applications

6. The broadcast server ,BCS, according to claim 5, wherein the broadcast server is arranged to schedule transmission to and from the first and second user equipments in the ring group using the second channel ,CH2,

7. The broadcast server ,BCS, according to claim 5 or 6, wherein the broadcast server ,BCS, is positioned between the core network ,CN, and the service provider (3) or positioned together with the service provider (3) or positioned within the core network ,Cm, and positioned in the service layer.

8. The broadcast server ,BCS, according to any one of claims 5-7, wherein the network (1) is a cellular network managed by the radio base station ,RBS.

9. A system comprising the first mobile user equipment, UE1, according to any one of claims 1-4 and the broadcast server , BCS, according any one of claims 5-8.

10. A method for a wireless data communication network (1) comprising a first mobile user equipment ,UE1, and a broadcast server ,BCS, the first mobile user equipment ,UE1, comprising a transmitting unit ,Tx, a receiving unit ,Rx, a storage unit (2) and a first port ,P1, the user equipment ,UE1, communicates with a radio base station ,RBS, via the first port ,P1, on a first channel ,CH1, for in- and outgoing broadcast traffic provided by a service provider (3), **characterized in that** the first mobile equipment ,UE1, comprises a second port ,P2, and a first client application ,UCA1, co-operating with the broadcast server ,BCS, via the second port ,P2, and the radio base station ,RBS, on the first channel ,CH1, wherein the first client application ,UCA1, in a broadcast mode, provides the broadcast server ,BCS, with information regarding the first mobile user equipment, UE1, wherein the first client application ,UCA1, receives a decision from the broadcast server ,BCS, to either let the firstmobile user equipment, UE1, stay on the first channel ,CH1, as a ring group leader or to join an existing ring group using a second channel ,CH2, already used by at least a second user equipment ,UE2, being a ring group leader for use of the second channel ,CH2, as a common channel, wherein the first client application ,UCA1, terminates the first channel ,CH1, when the first mobile user equipment, UE1, switches to the second channel ,CH2, wherein the first client application ,UCA1, when the first mobile user equipment, UE1, is the ring group leader and the second client application ,UCA2, when the second user equipment ,UE2, is the ring group leader communicates group content and group control information to the broadcast server ,BCS.

11. The method according to claim 10, wherein the first client application ,UCA1, registers the first mobile user equipment,UE1, with the broadcast server ,BCS, wherein, after the broadcast server ,BCS, has authenticated the first mobile user equipment, UE1, the first client application ,UCA1, receives channel and existing ring group information from the broadcast server ,BCS.

12. The method according to any one of claims 10 or 11, wherein the first client application, UCA1, reports power condition and communication channel to the broadcast server, BCS.

13. The method according to any one of claims 10-12, wherein the first client application, UCA1, updates the broadcast server, BCS, regarding power condition and selected communication channel.

14. The method according to any one of claims 10-13, wherein the broadcast server, BCS, comprises means for receiving data (4), means for transmitting data (5) and means for storing data (6), wherein the broadcast server, BCS, receives information at least regarding power condition and channel information and stores the information in the means for storing data (6), wherein the broadcast server, BCS, based on the stored information, decide whether the first user equipment should join at least a second user equipment, UE2, being a ring group leader or whether the first mobile user equipment should be designated ring group leader, the second user equipment, UE2, comprises a second client application (UCA2), the first mobile user equipment, UE1, and the second user equipment, UE2, form a ring group, wherein, if the broadcast server decides that first mobile user equipment, UE1, should join the second user equipment, UE2, the broadcast server, BCS, communicates stored information regarding the second user equipment, UE2, to the first client application, UCA1, for enabling the first client application, UCA1, to tune in to the second channel for use of the second channel, CH2, as a common channel, wherein the broadcast server , BCS, receives the group and group control information from the client application of the ring group leader, wherein the broadcast server, BCS, is arranged to relay back parts of the group content and group control information on the second downlink channel , CH2, used as a common channel to all user equipments in the ring group and their respective client applications.

15. The method according to claim 14, wherein the broadcast server, BCS, is arranged to schedule transmission to and from the first and second user equipments in the ring group using the second channel CH2.

16. The method according to claim 14 or 15, wherein the broadcast server , BCS, is positioned between the core network, CN, and the service provider (3) or positioned together with the service provider (3) or positioned within the core network, CN, and positioned in the service layer.

17. The method according to any one of claims 10-16, wherein the network (1) is a cellular network managed by the radio base station, RBS.

## Patentansprüche

1. Erste mobile Benutzereinrichtung, UE1, für ein drahtloses Datenkommunikationsnetz (1), wobei die erste mobile Benutzereinrichtung, UE1, eine Sendeeinheit, Tx, eine Empfangseinheit, Rx, eine Speichereinheit (2) und einen ersten Port, P1, umfasst, wobei die erste mobile Benutzereinuchtung, UE1, dafür eingerichtet ist, mit einer Funkbasisstation, RBS, über den ersten Port, P1, auf einem ersten Kanal, CH1, für ankommenden und abgehenden Rundsendeverkehr zu kommunizieren, der durch einen Dienstanbieter (3) bereitgestellt wird, **dadurch gekennzeichnet, dass** die erste mobile Benutzereinuchtung, UE1, einen zweiten Port, P2, und eine erste Client-Anwendung, UCA1, umfasst, die für das Zusammenwirken mit einem Rundsendeserver, BCS, über den zweiten Port, P2, und die Funkbasisstation, RBS, auf dem ersten Kanal, CH1, eingerichtet ist, wobei die erste Client-Anwendung, UCA1, dafür eingerichtet ist, in den Rundsendemodus umschalten zu können, und wenn sie im Rundsendemodus ist, dann dafür eingerichtet ist, den Rundsendesemer, BCS, mit Information bezüglich der ersten mobilen Benutzereinuchtung, UE1, zu beliefern, wobei die erste Client-Anwendung, UCA1, dafür eingerichtet ist, eine Entscheidung vom Rundsendeserver, BCS, zu empfangen, nämlich entweder die erste mobile Benutzereinrichtung, UE1, auf dem ersten Kanal, CH1, als Ringgruppenleiter verbleiben zu lassen oder sie in eine bestehende Ringgruppe einzufügen, die den zweiten Kanal, CH2, verwendet, der bereits durch mindestens eine zweite Benutzereinuchtung, UE2, verwendet wird, die Ringgruppenleiter zur Verwendung des zweiten Kanals, CH2, als gemeinsamen Kanal ist, wobei die erste Client-Anwendung, UCA1, dafür eingerichtet ist, den ersten Kanal, CH1, abzuschließen, wenn die erste Benutzereinuchtung, UE1, auf den zweiten Kanal, CH2, umschaltet, wobei die erste Client-Anwendung, UCA1, wenn die erste mobile Benutzereinrichtung, UE1, der Ringgruppenleiter ist, dafür eingerichtet ist, Gruppeninhalt und Gruppensteuerungsinformation an den Rundsendeserver, BCS, zu übermitteln.

2. Erste mobile Benutzereinrichtung, UE1, nach Anspruch 1, wobei die erste Client-Anwendung, UCA1, dafür eingerichtet ist, die erste mobile Benutzereinuchtung, UE1, beim Rundsendeserver, BCS, zu registrieren, wobei nachdem der Rundsendeserver, BCS, die erste Benutzereinrichtung, UE1, authentifiziert hat, die erste Client-Anwendung, UCA1, dafür eingerichtet ist, Kanal- und bestehende Ringgruppeninformation vom Rundsendeserver, BCS, zu empfangen.

3. Erste mobile Benutzereinrichtung, UE1, nach einem der Ansprüche 1 oder 2, wobei die erste Client-Anwendung, UCA1, dafür eingerichtet ist, die Leistungsbedingung und den ausgewählten Kommunikationskanal dem Rundsendeserver, BCS, zu melden.

4. Erste mobile Benutzereinrichtung, UE1, nach einem der Ansprüche 1 bis 3, wobei die erste Client-Anwendung, UCA1, dafür eingerichtet ist, den Rundsendeserver, BCS, bezüglich der Leistungsbedingung und des Kommunikationskanals zu aktualisieren.

5. Rundsendeserver, BCS, für ein drahtloses Datenkommunikationsnetz (1), wobei der Rundsendesemer, BCS, ein Mittel zum Empfangen von Daten (4), ein Mittel zum Übertragen von Daten (5) und ein Mittel zum Speichern von Daten (6) umfasst, **dadurch gekennzeichnet, dass** der Rundsendeserver, BCS, für das Zusammenwirken mit mindestens einer ersten Client-Anwendung, UCA1, über einen zweiten Port, P2, einer ersten mobilen Benutzereinrichtung, UE1, eingerichtet ist, wobei der Rundsendeserver, BCS, dafür eingerichtet ist, Information mindestens bezüglich der Leistungsbedingung und der Kanalinformation zu empfangen und die Information in dem Mittel zum Speichern von Daten (6) zu speichern, wobei der Rundsendesemer, BCS, dafür eingerichtet ist, auf der Grundlage der gespeicherten Information zu entscheiden, ob die erste mobile Benutzereinrichtung sich in eine bestehende Ringgruppe einfügen soll, wenn mindestens eine zweite Benutzereinrichtung, UE2, Ringgruppenleiter ist, oder ob die erste mobile Benutzereinuchtung als Ringgruppenleiter festgelegt werden soll, wobei die zweite Benutzereinrichtung, UE2, eine zweite Client-Anwendung, UCA2, umfasst, wobei die erste mobile Benutzereinuchtung, UE1, und die zweite Benutzereinrichtung, UE2, eine Ringgruppe bilden, wobei, wenn der Rundsendeserver entscheidet, dass die erste mobile Benutzereinuchtung, UE1, sich der bestehenden Ringgruppe anschließen soll, wo die zweite Benutzereinrichtung, UE2, der Ringgruppenleiter ist, der Rundsendeserver, BCS, dafür eingerichtet ist, gespeicherte Information bezüglich der zweiten Benutzereinrichtung, UE2, an die erste Client-Anwendung, UCA1, zu übermitteln, damit die erste Client-Anwendung, UCA1, sich auf einen zweiten Kanal, CH2, zur Verwendung des zweiten Kanals, CH2, als gemeinsamen Kanal einstellen kann, wobei der Rundsendeserver, BCS, dafür eingerichtet ist, Inhalt und Gruppensteuerungsinformation von der ersten Client-Anwendung, UCA1, zu empfangen, wenn die erste mobile Benutzereinrichtung, UE1, der Ringgruppenleiter ist, und von der zweiten Client-Anwendung, UCA2, zu empfangen, wenn die zweite Benutzereinrichtung, UE2, der Ringgruppenleiter ist, wobei der Rundsendeserver, BCS, dafür eingerichtet ist, Teile des Gruppeninhalts und der Gruppensteuerungsinformation auf dem zweiten Downlink-Kanal, CH2, zurückzusenden, der als gemeinsamer Kanal aller Benutzereinrichtungen in der Ringgruppe und ihre jeweiligen Client-Anwendungen verwendet wird.

6. Rundsendeserver, BCS, nach Anspruch 5, wobei der Rundsendesemer dafür eingerichtet ist, die Übertragung an die und von der ersten und zweiten Benutzereinrichtung in der Ringgruppe unter Verwendung des zweiten Kanals, CH2, zu planen.

7. Rundsendeserver, BCS, nach Anspruch 5 oder 6, wobei der Rundsendeserver, BCS, zwischen dem Kernnetz, CN, und dem Dienstanbieter (3) positioniert ist oder zusammen mit dem Dienstanbieter (3) positioniert ist oder innerhalb des Kernnetzes, CN, positioniert ist und in der Dienstschicht positioniert ist.

8. Rundsendeserver, BCS, nach einem der Ansprüche 5 bis 7, wobei das Netz (1) ein zellulares Netz ist, das durch die Funkbasisstation, RBS, verwaltet wird.

9. System, umfassend die erste mobile Benutzereinrichtung, UE1, nach einem der Ansprüche 1 bis 4, und den Rundsendeserver, BCS, nach einem der Ansprüche 5 bis 8.

10. Verfahren für ein drahtloses Datenkommunikationsnetz (1), umfassend eine erste mobile Benutzereinrichtung, UE1, und einen Rundsendesemer, BCS, wobei die erste mobile Benutzereinuchtung, UE1, eine Sendeeinheit, Tx, eine Empfangseinheit, Rx, eine Speichereinheit (2) und einen ersten Port, P1, umfasst, wobei die Benutzereinuchtung, UE1, mit einer Funkbasisstation, RBS, über den ersten Port, P1, auf einem ersten Kanal CH1, für ankommenden und abgehenden Rundsendeverkehr kommuniziert, der durch einen Dienstanbieter (3) bereitgestellt wird, **dadurch gekennzeichnet, dass** die erste mobile Einrichtung, UE1, einen zweiten Port, P2, und eine erste Client-Anwendung, UCA1, umfasst, die mit der Rundsendeserver, BCS, über den zweiten Port, P2, und die Funkbasisstation, RBS, auf dem ersten Kanal, CH1, zusammenwirkt, wobei die erste Client-Anwendung, UCA1, in einem Rundsendemodus den Rundsendesemer, BCS, mit Information bezüglich der ersten mobilen Benutzereinrichtung, UE1, beliefert, wobei die erste Client-Anwendung, UCA1, eine Entscheidung vom Rundsendesemer, BCS, empfängt, nämlich entweder die erste mobile Benutzereinuchtung, UE1, auf dem ersten Kanal, CH1, als Ringgruppenleiter verbleiben zu lassen oder sie in eine bestehende Ringgruppe unter Verwendung eines zweiten Kanals, CH2, einzufügen, der durch mindestens eine zweite Benutzereinuchtung, UE2, verwendet wird, die Ringgruppenleiter zur Verwendung des zweiten Kanals CH2 als gemeinsamen Kanal ist, wobei die erste Client-Anwendung, UCA1, den ersten Kanal CH1 abschließt, wenn die erste mobile Benutzereinrichtung UE1, auf den zweiten Kanal, CH2, umschaltet, wobei die erste Client-Anwendung, UCA1, wenn die erste mobile Benutzereinrichtung, UE1, der Ringgruppenleiter ist, und die zweite Client-Anwendung, UCA2, wenn die zweite Benutzereinrichtung, UE2, der Ringgruppenleiter ist, Gruppeninhalt und Gruppensteuerungsinformation an den Rundsendeserver, BCS, übermittelt.

11. Verfahren nach Anspruch 10, wobei die erste Client-Anwendung, UCA1, die erste mobile Benutzereinrichtung, UE1, beim Rundsendeserver, BCS, registriert, wobei, nachdem der Rundsendeserver, BCS, die erste mobile Benutzereinrichtung, UE1, authentifiziert hat, die erste Client-Anwendung, UCA1, Kanal- und bestehende Ringgruppeninformation vom Rundsendeserver, BCS, empfängt.

12. Verfahren nach einem der Ansprüche 10 oder 11, wobei die erste Client-Anwendung, UCA1, die Leistungsbedingung und den Kommunikationskanal dem Rundsendeserver, BCS, meldet.

13. Verfahren nach einem der Ansprüche 10 bis 12, wobei die erste Client-Anwendung, UCA1, den Rundsendeserver, BCS, bezüglich der Leistungsbedingung und des ausgewählten Kommunikationskanals aktualisiert.

14. Verfahren nach einem der Ansprüche 10 bis 13, wobei der Rundsendeserver, BCS, ein Mittel zum Empfangen von Daten (4), ein Mittel zum Übertragen von Daten (5) und ein Mittel zum Speichern von Daten (6) umfasst, wobei der Rundsendesemer, BCS, Information zumindest bezüglich der Leistungsbedingung und der Kanalinformation empfängt und die Information in dem Mittel zum Speichern von Daten (6) speichert, wobei der Rundsendeserver, BCS, auf der Grundlage der gespeicherten Information entscheidet, ob die erste mobile Benutzereinrichtung sich in mindestens eine zweite Benutzereinrichtung, UE2, einfügen soll, die ein Ringgruppenleiter ist, oder ob die erste mobile Benutzereinuchtung als Ringgruppenleiter festgelegt werden soll, wobei die zweite Benutzereinrichtung, UE2, eine zweite Client-Anwendung (UCA2) umfasst, wobei die erste mobile Benutzereinuchtung, UE1, und die zweite Benutzereinrichtung, UE2, eine Ringgruppe bilden, wobei, wenn der Rundsendeserver entscheidet, dass die erste mobile Benutzereinuchtung, UE1, sich in die zweite Benutzereinrichtung, UE2, einfügen soll, der Rundsendeserver, BCS, gespeicherte Information bezüglich der zweiten Benutzereinrichtung, UE2, an die erste Client-Anwendung, UCA1, übermittelt, damit die erste Client-Anwendung, UCA1, sich auf den zweiten Kanal zur Verwendung des zweiten Kanals, CH2, als gemeinsamen Kanal einstellen kann, wobei der Rundsendesemer, BCS, die Gruppe und die Gruppensteuerungsinformation von der Client-Anwendung des Ringgruppenleiters empfängt, wobei der Rundsendesemer, BCS, dafür eingerichtet ist, Teile des Gruppeninhalts und Gruppensteuerungsinformation auf dem zweiten Downlink-Kanal, CH2, der als gemeinsamer Kanal für alle Benutzereinrichtungen in der Ringgruppe und ihre jeweiligen Client-Anwendungen verwendet wird.

15. Verfahren nach Anspruch 14, wobei der Rundsendeserver, BCS, dafür eingerichtet ist, die Übertragung an die und von der ersten und zweiten Benutzereinrichtung in der Ringgruppe unter Verwendung des zweiten Kanals, CH2, zu planen.

16. Verfahren nach Anspruch 14 oder 15, wobei der Rundsendeserver, BCS, zwischen dem Kernnetz, CN, und dem Dienstanbieter (3) positioniert ist oder zusammen mit dem Dienstanbieter (3) positioniert ist oder innerhalb des Kernnetzes, CN, positioniert ist und in der Dienstschicht positioniert ist.

17. Verfahren nach einem der Ansprüche 10 bis 16, wobei das Netz (1) ein zellulares Netz ist, das durch die Funkbasisstation, RBS, verwaltet wird.

## Revendications

1. Premier équipement d'utilisateur mobile, UE1, pour un réseau de communication de données sans fil (1), le premier équipement d'utilisateur mobile, UE1, comprenant une unité d'émission, Tx, une unité de réception, Rx, une unité de stockage (2) et un premier port, P1, le premier équipement d'utilisateur mobile, UE1, étant agencé de manière à communiquer avec une station de base radio, RBS, par le biais du premier port, P1, sur un premier canal, CH1, dédié au trafic de diffusion entrant et sortant fourni par un fournisseur de services (3), **caractérisé en ce que** le premier équipement d'utilisateur mobile, UE1, comporte un second port, P2, et une première application client, UCA1, agencée en vue d'une coopération avec un serveur de diffusion, BCS, par le biais du second port, P2, et la station de base radio, RBS, sur le premier canal, CH1, dans lequel la première application client, UCA1, est agencée de manière à être apte à basculer sur un mode de diffusion et, lorsqu'elle est en mode de diffusion, est alors agencée de manière à fournir, au serveur de diffusion, BCS, des informations concernant le premier équipement d'utilisateur mobile, UE1, dans lequel la première application client, UCA1, est agencée de manière à recevoir une décision en provenance du serveur de diffusion, BCS, visant soit à laisser le premier équipement d'utilisateur mobile, UE1, rester sur le premier canal, CH1, en qualité de chef de groupe de sonneries, soit à rejoindre un groupe de sonneries existant utilisant un second canal, CH2, déjà utilisé par au moins un second équipement d'utilisateur, UE2, lequel est un chef de groupe de sonneries en vue de l'utilisation du second canal, CH2, en qualité de canal commun, dans lequel la première application client, UCA1, est agencée de manière à mettre fin au premier canal, CH1, lorsque le premier équipement d'utilisateur, UE1, bascule sur le second canal, CH2, dans lequel la première application client, UCA1, lorsque le premier équipement d'utilisateur mobile, UE1, est le chef de groupe de sonneries, est agencée de manière à communiquer des informations de commande de groupe et de contenu de groupe au serveur de diffusion, BCS.

2. Premier équipement d'utilisateur mobile, UE1, selon la revendication 1, dans lequel la première application client, UCA1, est agencée de manière à enregistrer le premier équipement d'utilisateur mobile, UE1, auprès du serveur de diffusion, BCS, dans lequel, après que le serveur de diffusion, BCS, a authentifié le premier équipement d'utilisateur, UE1, la première application client, UCA1, est agencée de manière à recevoir des informations de groupe de sonneries existant et de canal en provenance du serveur de diffusion, BCS.

3. Premier équipement d'utilisateur mobile, UE1, selon l'une quelconque des revendications 1 ou 2, dans lequel la première application client, UCA1, est agencée de manière à signaler un état de puissance et un canal de communication sélectionné au serveur de diffusion, BCS.

4. Premier équipement d'utilisateur mobile, UE1, selon l'une quelconque des revendications 1 à 3, dans lequel la première application client, UCA1, est agencée de manière à mettre à jour le serveur de diffusion, BCS, en ce qui concerne l'état de puissance et le canal de communication.

5. Serveur de diffusion, BSC, pour un réseau de communication de données sans fil (1), dans lequel le serveur de diffusion, BCS, comprend un moyen pour recevoir des données (4), un moyen pour émettre des données (5) et un moyen pour stocker des données (6), **caractérisé en ce que** le serveur de diffusion, BCS, est agencé en vue d'une coopération avec au moins une première application client, UCA1, par le biais d'un second port, P2, d'un premier équipement d'utilisateur mobile, UE1, dans lequel le serveur de diffusion, BCS, est agencé de manière à recevoir des informations concernant au moins l'état de puissance et des informations de canal et à stocker les informations dans le moyen de stockage de données (6), dans lequel le serveur de diffusion, BCS, est agencé, sur la base des informations stockées, de manière à décider si le premier équipement d'utilisateur mobile doit rejoindre un groupe de sonneries existant, où au moins un second équipement d'utilisateur, UE2, est un chef de groupe de sonneries, ou si le premier équipement d'utilisateur mobile doit être désigné comme chef de groupe de sonneries, le second équipement d'utilisateur, UE2, comprenant une seconde application client, UCA2, le premier équipement d'utilisateur mobile, UE1, et le second équipement d'utilisateur, UE2, formant un groupe de sonneries, dans lequel, si le serveur de diffusion décide que le premier équipement d'utilisateur mobile, UE1, doit rejoindre le groupe de sonneries existant dans lequel le second équipement d'utilisateur, UE2, est le chef de groupe de sonneries, le serveur de diffusion, BCS, est agencé de manière à communiquer des informations stockées concernant le second équipement d'utilisateur, UE2, à la première application client, UCA1, en vue de permettre à la première application client, UCA1, de se syntoniser sur un second canal, CH2, en vue de l'utilisation du second canal, CH2, en qualité de canal commun, dans lequel le serveur de diffusion, BCS, est agencé de manière à recevoir des informations de commande de groupe et de contenu en provenance de la première application client, UCA1, lorsque le premier équipement d'utilisateur mobile, UE1, est le chef de groupe de sonneries, et de la seconde application client, UCA2, lorsque le second équipement d'utilisateur, UE2, est le chef de groupe de sonneries, dans lequel le serveur de diffusion, BCS, est agencé de manière à relayer des parties d'informations de commande de groupe et de contenu de groupe sur le second canal en liaison descendante, CH2, utilisé en qualité de canal commun, à tous les équipements d'utilisateur dans le groupe de sonneries ainsi qu'à leurs applications clients respectives.

6. Serveur de diffusion, BCS, selon la revendication 5, dans lequel le serveur de diffusion est agencé de manière à ordonnancer les transmissions vers et depuis les premier et second équipements d'utilisateur dans le groupe de sonneries en utilisant le second canal, CH2.

7. Serveur de diffusion, BCS, selon la revendication 5 ou 6, dans lequel le serveur de diffusion, BCS, est positionné entre le réseau central, CN, et le fournisseur de services (3), ou est positionné conjointement avec le fournisseur de services (3), ou est positionné au sein du réseau central, CN, et est positionné dans la couche de service.

8. Serveur de diffusion, BCS, selon l'une quelconque des revendications 5 à 7, dans lequel le réseau (1) est un réseau cellulaire géré par la station de base radio, RBS.

9. Système comprenant le premier équipement d'utilisateur mobile, UE1, selon l'une quelconque des revendications 1 à 4, et le serveur de diffusion, BCS, selon l'une quelconque des revendications 5 à 8.

10. Procédé pour un réseau de communication de données sans fil (1) comprenant un premier équipement d'utilisateur mobile, UE1, et un serveur de diffusion, BCS, le premier équipement d'utilisateur mobile, UE1, comprenant une unité d'émission, Tx, une unité de réception, Rx, une unité de stockage (2) et un premier port, P1, dans lequel le premier équipement d'utilisateur, UE1, communique avec une station de base radio, RBS, par le biais du premier port, P1, sur un premier canal, CH1, dédié au trafic de diffusion entrant et sortant fourni par un fournisseur de services (3), **caractérisé en ce que** le premier équipement d'utilisateur mobile, UE1, comporte un second port, P2, et une première application client, UCA1, coopérant avec le serveur de diffusion, BCS, par le biais du second port, P2, et la station de base radio, RBS, sur le premier canal, CH1, dans lequel la première application client, UCA1, en un mode de diffusion, fournit, au serveur de diffusion, BCS, des informations concernant le premier équipement d'utilisateur mobile, UE1, dans lequel la première application client, UCA1, reçoit une décision en provenance du serveur de diffusion, BCS, visant soit à laisser le premier équipement d'utilisateur mobile, UE1, rester sur le premier canal, CH1, en qualité de chef de groupe de sonneries, soit rejoindre un groupe de sonneries existant utilisant un second canal, CH2, déjà utilisé par au moins un second équipement d'utilisateur, UE2, lequel est un chef de groupe de sonneries en vue de l'utilisation du second canal, CH2, en qualité de canal commun, dans lequel la première application client, UCA1, met fin au premier canal, CH1, lorsque le premier équipement d'utilisateur mobile, UE1, bascule sur le second canal, CH2, dans lequel la première application client, UCA1, lorsque le premier équipement d'utilisateur mobile, UE1, est le chef de groupe de sonneries, et la seconde application client, UCA2, lorsque le second équipement d'utilisateur, UE2, est le chef de groupe de sonneries, communiquent des informations de commande de groupe et de contenu de groupe au serveur de diffusion, BCS.

11. Procédé selon la revendication 10, dans lequel la première application client, UCA1, enregistre le premier équipement d'utilisateur mobile, UE1, auprès du serveur de diffusion, BCS, dans lequel, après que le serveur de diffusion, BCS, a authentifié le premier équipement d'utilisateur mobile, UE1, la première application client, UCA1, reçoit des informations de groupe de sonneries existant et de canal en provenance du serveur de diffusion, BCS.

12. Procédé selon l'une quelconque des revendications 10 ou 11, dans lequel la première application client, UCA1, signale un état de puissance et un canal de communication au serveur de diffusion, BCS.

13. Procédé selon l'une quelconque des revendications 10 à 12, dans lequel la première application client, UCA1, met à jour le serveur de diffusion, BCS, en ce qui concerne l'état de puissance et le canal de communication sélectionné.

14. Procédé selon l'une quelconque des revendications 10 à 13, dans lequel le serveur de diffusion, BCS, comprend un moyen pour recevoir des données (4), un moyen pour émettre des données (5) et un moyen pour stocker des données (6), dans lequel le serveur de diffusion, BCS, reçoit des informations concernant au moins l'état de puissance et des informations de canal, et stocke les informations dans le moyen de stockage de données (6), dans lequel le serveur de diffusion, BCS, sur la base des informations stockées, décide si le premier équipement d'utilisateur mobile doit rejoindre au moins un second équipement d'utilisateur, UE2, lequel est un chef de groupe de sonneries, ou si le premier équipement d'utilisateur mobile doit être désigné comme chef de groupe de sonneries, le second équipement d'utilisateur, UE2, comprenant une seconde application client, UCA2, le premier équipement d'utilisateur mobile, UE1, et le second équipement d'utilisateur, UE2, formant un groupe de sonneries, dans lequel, si le serveur de diffusion décide que le premier équipement d'utilisateur mobile, UE1, doit rejoindre le second équipement d'utilisateur, UE2, le serveur de diffusion, BCS, communique des informations stockées concernant le second équipement d'utilisateur, UE2, à la première application client, UCA1, en vue de permettre à la première application client, UCA1, de se syntoniser sur le second canal, CH2, en vue de l'utilisation du second canal, CH2, en qualité de canal commun, dans lequel le serveur de diffusion, BCS, reçoit les informations de commande de groupe et de groupe en provenance de l'application client du chef de groupe de sonneries, dans lequel le serveur de diffusion, BCS, est agencé de manière à relayer des parties des informations de commande de groupe et de contenu de groupe sur le second canal en liaison descendante, CH2, utilisé en qualité de canal commun, à tous les équipements d'utilisateur dans le groupe de sonneries ainsi qu' à leurs applications clients respectives.

15. Procédé selon la revendication 14, dans lequel le serveur de diffusion, BCS, est agencé de manière à ordonnancer les transmissions vers et depuis les premier et second équipements d'utilisateur dans le groupe de sonneries en utilisant le second canal, CH2.

16. Procédé selon la revendication 14 ou 15, dans lequel le serveur de diffusion, BCS, est positionné entre le réseau central, CN, et le fournisseur de services (3), ou est positionné conjointement avec le fournisseur de services (3), ou est positionné au sein du réseau central, CN, et est positionné dans la couche de service.

17. Procédé selon l'une quelconque des revendications 10 à 16, dans lequel le réseau (1) est un réseau cellulaire géré par la station de base radio, RBS.
